# EUROPEAN PATENT APPLICATION

(11) **EP 1 879 109 A1**
(43) Date of publication of application: **16.01.2008**
(21) Application number: 06730422.0
(22) Date of filing: 29.03.2006
(51) Int. Cl.: G06F 12/00, G06F 9/445, G06F 11/20

(54) **INFORMATION PROCESSING DEVICE, PROGRAM, AND STORAGE MEDIUM**

(30) Priority: 29.03.2005 JP 2005093402
(71) Applicant: Fujitsu Ltd., Kawasaki-shi, Kanagawa 211-8588 (JP)
(72) Inventor: HAMA, Akihiro, ahara-ku, Kawasaki-shi, Kanagawa, 211858 (JP); KOBA, Takahiro, ahara-ku, Kawasaki-shi, Kanagawa, 211858 (JP); KIMURA, Masatoshi, ahara-ku, Kawasaki-shi, Kanagawa, 211858 (JP)
(74) Representative: Cooper-Rolfe, Elizabeth Louise
(86) International application number: PCT/JP2006/306474
(87) International publication number: WO 2006/104197

(57) **Abstract**

Provided is an information processing device capable of utilizing important data even if a trouble occurs. The information processing device comprises a storage device for storing a first basic program and data, start means for executing a second basic program, which is stored in a second storage unit at least logically different from the first storage unit of the storage device having stored the first basic program and data, thereby to activate the information processing device, and save means for saving the data stored in the first storage unit, to a predetermined storage area by utilizing the second basic program.

## Description

### BACKGROUND OF THE INVENTION

The present invention relates an information processing device such as a personal computer, and more particularly to an information processing device that saves storage contents of a storage device included in the information processing device and restores the save storage contents, a method executed by the information processing device, a program executed in the information processing device, and a storage medium stored with the program.

The personal computer (which will hereinafter be abbreviated a PC) has a hard disk as a storage device, wherein the hard disk is stored with a variety of programs such as an operating system (which will hereinafter be abbreviated to an [OS]); a device driver program (which will hereinafter referred to as a [device driver]) and an application program, and with data used for these programs or generated and updated.

Generally, the PC, upon receiving a power-on instruction, at first executes BIOS (Basic Input Output System), thereby starting a process of booting the PC. The BIOS, after completing an initial setting, reads the OS from the hard disk and loads the OS into a main memory. The OS loaded into the main memory loads the device driver into the main memory and also conducts multiple settings, thereby enabling a variety of devices included in the PC to be used. A user performs various types of works such as creating documents and carrying out data communications by executing desired application programs.

When the PC normally functions, in order to perform the works, the PC executes the operations such as reading the multiple programs stored in the hard disk and writing data by accessing the hard disk. If a physical fault occurs in the hard disk and if part of programs configuring the OS is damaged by a computer virus etc, however, there occurs a failure disabling an access to the multiple programs and the data stored in the hard disk.

A scheme realized in preparation against the occurrence of such a fault is that the storage contents of the hard disk are backed up, the backed-up storage content of the hard disk are returned to the hard disk when the fault occurs, and the PC is made to normally function by restoring the hard disk.

This type of backup process is called "rescue" while the restoring process is called "recovery", and these processes are broadly known (refer to, e.g., Non-Patent document 1).
[Non-Patent document 1]
"IBM Rescue and Recovery V2.0 User's Guide", [online], December 7 in 2004, IBM Japan, [searched on March 27 in 2005], Internet <http://www-6.ibm.com/jp/pc/migration/rr/rnrv2_usersguide.pdf>
[Patent document 1]
Japanese Patent Application Laid-Open Publication No.2003-308254

### SUMMARY OF THE INVENTION

The backup process and the restoring process of the hard disk are well known as in Non-Patent document 1, however, the hard disk backup process disclosed in Non-Patent document 1 is executed by an application program on the OS employed by the PC for a normal operation.

Accordingly, if such a fault occurs that the OS used for the PC to conduct the normal operation is broken down with the result that the hard disk can not be normally accessed, though possible of restoring the storage contents of the hard disk that have been backed up before the occurrence of the fault, a program and data, which are generated or updated during a period from the last backup process up to the occurrence of the fault, can not be restored.

Herein, some of files configuring the application program and the device program are available from a CD for installation, a Web site of the maker, etc, however, pieces of data important especially to the user, such as a data file generated or updated by the user employing the application program, the OS changed by user customization and a setting information file for the application program, are lost and can not be restored.

The present invention, which was devised under actual circumstances, aims at providing an information processing device capable of using the important data. Further, the present invention aims at providing a program for realizing this information processing device and a storage medium stored with the program.

To accomplish the objects, according to the present invention, an information processing device having a storage device stored with a first basic program and data, comprises startup means setting the information processing device in an operating status by executing a second basic program stored in a second storage unit at least logically different from a first storage unit of the storage device that is stored with the first basic program and the data; and saving means saving the data stored in the first storage unit into a predetermined storage area by use of the second basic program.

Further, in the information processing device, the second storage unit may be stored with storage contents of the first storage unit, which contain the first basic program in the normally operating status, and, the storage contents of the first storage unit that are stored in the second storage unit may be transferred to the first storage unit, the information processing device may further comprise: first restoring means restoring the first storage unit so that the information processing device is set in a normally operating status by the first basic program in a way that transfers the storage contents of the first storage unit, which are stored in the second storage unit, to the first storage unit; and second restoring means restoring the data saved in the predetermined storage area back to the storage device after restoring the first storage unit by the first restoring means.

Still further, the information processing device may further comprise transferring means getting a basic program area, on the storage device, stored with the second basic program stored in the second storage unit, wherein the startup means may execute the second basic program transferred to the basic program area.

Yet further, in the information processing device, the storage device may include a plurality of physically different storage devices, a first storage device in the plurality of storage devices may be stored with at least the first basic program, and a second storage device may be stored with the data, the information processing device may further comprise a fault detecting unit detecting a fault of the first storage device, when the fault detecting unit detects the fault of the first storage device, the transferring means may get a basic program area, on the second storage device, stored with a second basic program stored in the second storage unit, and the saving means may save the data, stored in the second storage device, in the predetermined storage area by use of the second basic program transferred.

Moreover, according to the present invention, a program executed by an information processing device having a storage device stored with a first basic program and data, makes the information processing device execute: a step of setting the information processing device in an operating status by a second basic program stored in a second storage unit at least logically different from a first storage unit of the storage device that is stored with the first basic program and the data; and a step of saving the data stored in the first storage unit into a predetermined storage area by a saving program stored in the second storage unit in a way that employs the second basic program.

Further, the program may further make the information processing device, the second storage unit being stored with storage contents of the first storage unit which contain the first basic program in the normally operating status, execute: a step of restoring the first storage unit by use of a first restoration program stored in the second storage unit so that the information processing device is set in a normally operating status by the first basic program in a way that transfers the storage contents of the first storage unit, which are stored in the second storage unit, to the first storage unit; and a step of restoring the data saved in the predetermined storage area back to the storage device by a second restoration program contained in the storage contents after restoring the first storage unit.

Furthermore, the program may further make the information processing device execute a step of transferring and storing the second basic program stored in the second storage unit to and in a basic program area on the storage device, wherein may read and execute the second basic program transferred to the basic program area.

Moreover, the program may further make the information processing device, the storage device including a plurality of physically different storage devices, a first storage device in the plurality of storage devices being stored with at least the first basic program and a second storage device being stored with the data, execute: a step of detecting a fault of the first storage device, wherein when detecting the fault of the first storage device, on the occasion of transferring the second basic program, the second basic program stored in the second storage unit may be stored in a basic program area on the second storage device, and on the occasion of saving the data, the data stored in the second storage device may be saved in the predetermined storage area by use of the second basic program transferred.

Further, according to the present invention, a storage medium is stored with a program executed by an information processing device having a storage device stored with a first basic program and data, the storage medium being a portable storage medium physically different from the storage device stored with the first basic program and the data and being stored with storage contents of the storage device that contain the first basic program in a normally operating status, the program making the information processing device execute: a step of setting the information processing device in an operating status by a second basic program stored in the portable storage medium; a step of saving the data stored in the storage device into a predetermined storage area by a saving program stored in the portable storage medium in a way that employs the second basic program; a step of restoring the storage device by use of a first restoration program stored in the portable storage medium so that the information processing device is set in a normally operating status by the first basic program in a way that transfers the storage contents of the storage device, which are stored in the portable storage medium, to the storage device; and a step of restoring the data saved in the predetermined storage area back to the storage device by a second restoration program contained in the storage contents after restoring the storage device.

Still further, an information processing met hod executed by an information processing device having a storage device stored with a first basic program and data, comprises: a step of setting the information processing device in an operating status by a second basic program stored in a second storage unit at least logically different from a first storage unit of the storage device that is stored with the first basic program and the data; and a step of saving the data stored in the first storage unit into a predetermined storage area by a saving program stored in the second storage unit in a way that employs the second basic program.

Yet further, the information processing method may further comprise a step of transferring and storing the second basic program stored in the second storage unit to and in a basic program area on the storage device, wherein may read and execute the second basic program transferred to the basic program area.

Additionally, the information processing method may further, the storage device including a plurality of physically different storage devices, a first storage device in the plurality of storage devices being stored with at least the first basic program and a second storage device being stored with the data, comprise: a step of detecting a fault of the first storage device, wherein when detecting the fault of the first storage device, on the occasion of transferring the second basic program, the second basic program stored in the second storage unit may be stored in a basic program area on the second storage device, and on the occasion of saving the data, the data stored in the second storage device may be saved in the predetermined storage area by use of the second basic program transferred.

As described above, according to the present invention, even if unable to access the data by the first basic program due to the occurrence of the fault in the storage device, another second basic program enables the data to be used in a way that accesses the data stored in the storage device. Moreover, the storage device can be restored in the status where the first basic program normally runs, and, after restoring the storage device, the data can be used on the storage device.

### BRIEF DESCRIPTION OF THE DRAWINGS

FIG.1 is a schematic diagram of a configuration of an information processing device according to a first embodiment of the present invention.
FIG.2 is an explanatory flowchart of a backup process according to the present invention.
FIG.3 is a diagram (part 1) showing display contents on a screen displayed in the backup process according to the present invention.
FIG. 4 is a diagram (part 2) showing the display contents on the screen displayed in the backup process according to the present invention.
FIG.5 is a diagram (part 3) showing the display contents on the screen displayed in the backup process according to the present invention.
FIG.6 is a diagram (part 4) showing the display contents on the screen displayed in the backup process according to the present invention.
FIG.7 is a diagram showing display contents on a screen displayed in a recovery process according to the present invention.
FIG. 8 is an explanatory flowchart of a restoring process according to the present invention.
FIG. 9 is a diagram showing display contents on a screen displayed in the restoring process according to the present invention.
FIG. 10 is an explanatory flowchart of a backup process in a second embodiment of the present invention.
FIG. 11 is a schematic diagram of a configuration of the information processing device according to a third embodiment of the present invention.
FIG. 12 is a diagram illustrating a normal status of a storage device in the third embodiment.
FIG.13 is a diagram showing a state of how a fault occurs in the storage device in the third embodiment.
FIG.14 is an explanatory flowchart of the backup process in the third embodiment of the present invention.
FIG.15 is an explanatory flowchart of the restoring process in the third embodiment of the present invention.

### DETAILED DESCRIPTION OF THE PREFERRED EMBODIMENT

### <First Embodiment>

One embodiment of the present invention will hereinafter be described with reference to the accompanying drawings. Configurations in the following embodiments are exemplifications, and the present invention is not limited to the configurations in the embodiments.

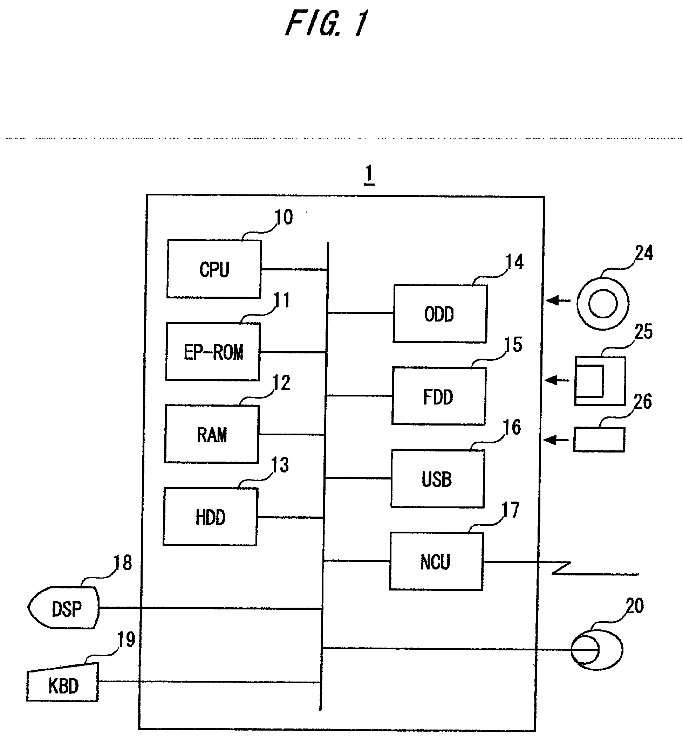

FIG. 1 is a schematic diagram of an information processing device 1 of the present invention. As illustrated in FIG. 1, the information processing device 1 in the present example is, e.g., a personal computer and includes a central processing unit (CPU) 10, an EP-ROM (Erasable Programmable Read-Only-Memory) 11, a main memory (Random Access Memory: RAM) 12, a hard disk drive (HDD, storage device) 13, an optical disk drive (ODD) 14, a flexible disk drive (FDD) 15, an USB (Universal Serial Bus) connector 16, a communication control device (Network Control Unit : NCU) 17, a display (DSP) 18, a keyboard (KBD) 19 and a mouse 20.

The CPU 10 operates and controls the information processing device 1 by executing a BIOS (Basic Input/Output System) stored on the EP-ROM 11 and an OS (Operating System, basic program), an application program that are stored on the HDD 13.

Further, the CPU 10, on the occasion of executing the OS and the application program, reads these programs from the HDD 13, then loads the programs into the RAM 12, and thus executes a variety of processes. Namely, the CPU 10 functions as a start-up means for setting the information processing device 1 in an operating status by executing a second OS, a saving means for saving the data stored in a first storage unit of the HDD 13 into a predetermined storage area, a first restoring means for restoring the first storage unit and a second restoring means for restoring the data saved in the predetermined storage area back to the storage device, and executes a rescue process and a recovery process as below.

For example, two logical partitions are set on the HDD 13, wherein an assumption is that one logical partition (the first storage unit) be stored with various items of data used by the OS (the first OS), the application program and other respective programs employed for the normal operations on the information processing device 1 and with user data generated and updated by the application program. Note that two pieces of physically different HDDs may also be set as the two logical partitions in stead of setting the two partitions logically on the single HDD.

The information processing device 1 includes the ODD 14 and the FDD 15 each serving as an auxiliary storage device (corresponding to a reading/writing device), wherein the program and the data are read from the storage mediums such as the optical disk (the second storage unit) 24 and the flexible disk (FD) 25 by use of these drives and are utilized for processing by the CPU 10. Further, the information processing device 1 transfers and stores the programs and the data to and in another information processing device via the communication line by a USB memory 26 connected to the HDD 13 and the USB connector 16 and further by the NCU 17.

The optical disk 24 is stored with a backup rescue program (a program for saving) given by way of one working example of a program according to the present invention and an OS (a second OS) for normally starting up the information processing device 1. Moreover, the optical disk 24 is stored with storage contents (the OS, the device driver, the application programs, the variety of data), as a disk image file, of the HDD 13 when delivered from a maker of the information processing device 1, and the disk image file contains a second restoration program as the application program given by way of one working example of the program according to the present invention. Further, the optical disk 24 is stored also with a first restoration program for restoring (contents of) the HDD 13 by use of the disk image file. Note that an available scheme is that the disk image file, if unable to be stored on a signal optical disk, is segmented into a plurality of sub-files and thus stored on a plurality of optical disks. In this case, such a function is included that the first restoration program reads the disk image sub-files from the individual optical disks in the segmenting sequence, and transfers the readout sub-files to the HDD 13.

The information processing device 1 has the KBD 19 and the mouse 20 as input devices, which are employed for a user to instruct a process. Further, the information processing device 1 has the DSP 18 as an output device, which is used for displaying a result of processing by the application program and a selection request to the user.

To begin with, a process at a normal operation time of the information processing device 1 will be explained. Note that this process is a generally known process in the personal computer at the present, and hence only a brief explanation thereof will be made herein.

The information processing device 1, when power-on is instructed by manipulating a power source button, at first starts up a POST (Power-On Self Test) program stored in the EP-ROM 11, thereby checking various hardware components of the information processing device 1. When the hardware of the information processing device 1 proves to be normal through the POST process, the BIOS stored in the EP-ROM 11 is executed, thereby initializing the information processing device 1 and performing various types of basic settings. Thereafter, the BIOS reads the first OS from the HDD 13, then loads the first OS into the RAM 12 and then executes the OS. The first OS, upon a start of the normal execution, reads a system file and a device driver program from the HDD 13, loads these pieces of software into the RAM 12 and conducts the various settings, and it comes to a standby status for the process instruction, wherein the application program is executed according to the instruction given by the user, and the process is carried out.

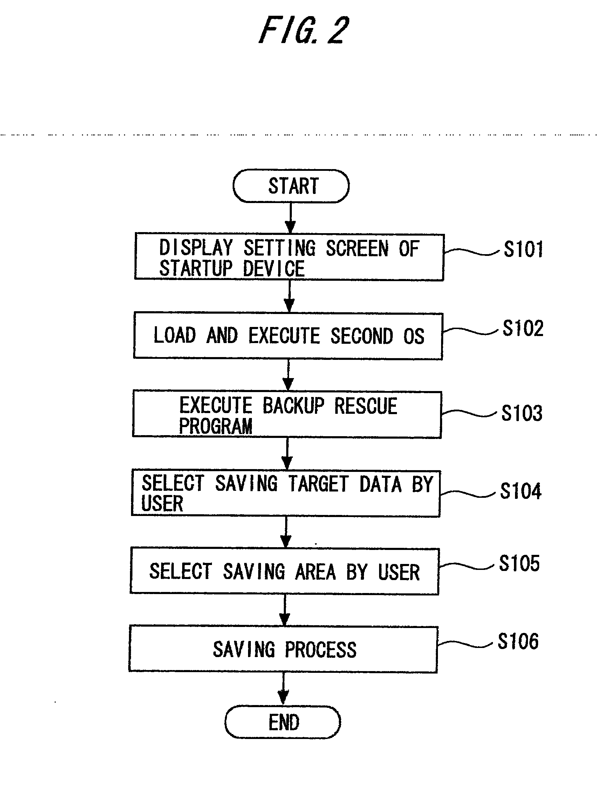

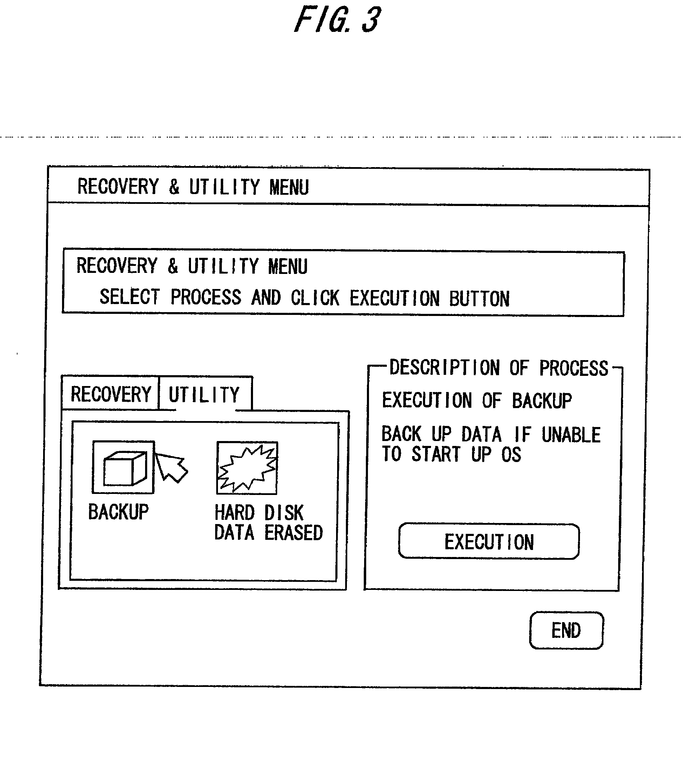

Next, a backup process, conducted if the first OS on the information processing device does not normally run, will be described with reference to FIGS 2 through 5. FIG. 2 is an explanatory flowchart of a backup process. FIGS. 3 - 5 are diagrams each showing a display content on the screen displayed on the DSP 18 in the process of the flowchart in FIG. 2.

To start with, when the user gives an instruction of power-on by manipulating a power button of the information processing device 1, the information processing device 1 (the CPU 10), after executing the POST process described above, executes the BIOS. When executing the BIOS, upon detecting that the user presses a predetermined key, a setting screen of a startup device is displayed. The user sets the ODD 14 as the startup device on the setting screen (step S101). When the setting of the startup device is done in step S101, an optical disk loaded in the ODD 14 is to be read out. Herein, an assumption is that the optical disk 24 stored with the program according to the present invention will have been loaded in the ODD 14. The information processing device 1 reads the second OS from the optical disk 24 loaded in the ODD 14, then loads this OS into the RAM 12 and executes the OS (step S102).
Subsequent to the execution of the second OS, the backup rescue program (a saving program) is read from the optical disk 24, then loaded into the RAM 12 and is executed (step S103).
When the backup rescue program is executed, a predetermined operation screen is displayed on the DSP 18, then the user recognizes saving process target data designated on the operation screen and also a saving area in which the saving process target data is saved, and a saving process of the target data is carried out (steps S104 - S106).
FIG. 3 is a diagram showing the operation screen displayed by the backup rescue program. The operation screen in FIG. 3 is displayed by executing the backup rescue program in step S103 in FIG. 2. A processing function of the backup rescue program is classified roughly into a two categories, [recovery] and [utility]. As illustrated in FIG. 3, the operation screen is provided with tabs for selecting the respective categories. Herein, the backup process is set to the category [utility], wherein an icon for giving an instruction of executing the backup process is displayed as a processing option. The user selects the "backup" icon by manipulating the mouse 20 as a mouse cursor pinpoints the "backup", and can give an instruction of starting the backup process by selecting an "execution" button.

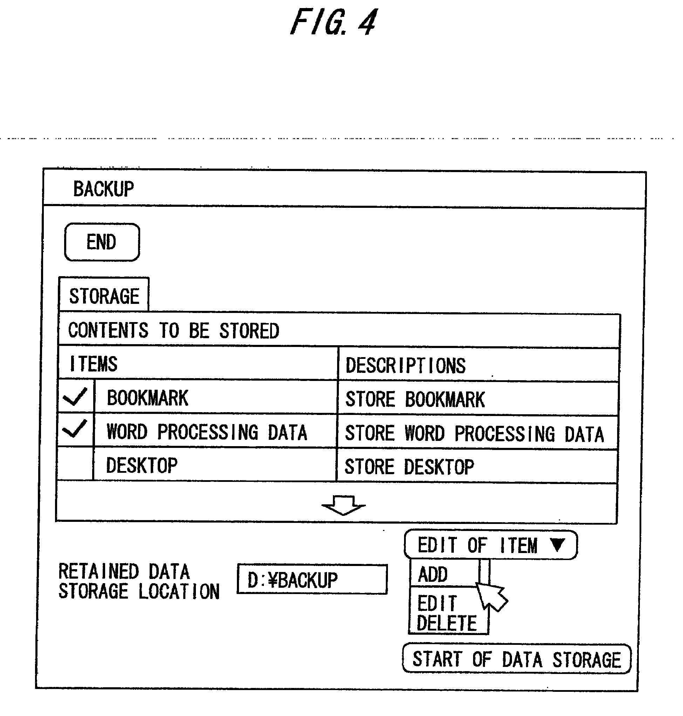

FIG. 4 is a diagram illustrating the operation screen for setting the backup started by selecting the "execution" button in FIG. 3. On the operation screen in FIG. 4, [contents to be stored] represent a list of information showing data selectable as backup targets. In the [contents to be stored], two categories of information are displayed, wherein pieces of information for identifying a data type are displayed in [items], and supplementary explanations are displayed in [descriptions]. Further, when checking a check box adjacent to each [item], the data in the checked [item] is selected as the backup target item, and, when canceling the check, the check-canceled data is excluded from the backup target items (step S104). Note that a default folder stored with the setting data of the application program installed in the HDD 13 when the information processing device 1 is delivered from the maker and with data generated by the user, is designated in an initial status.

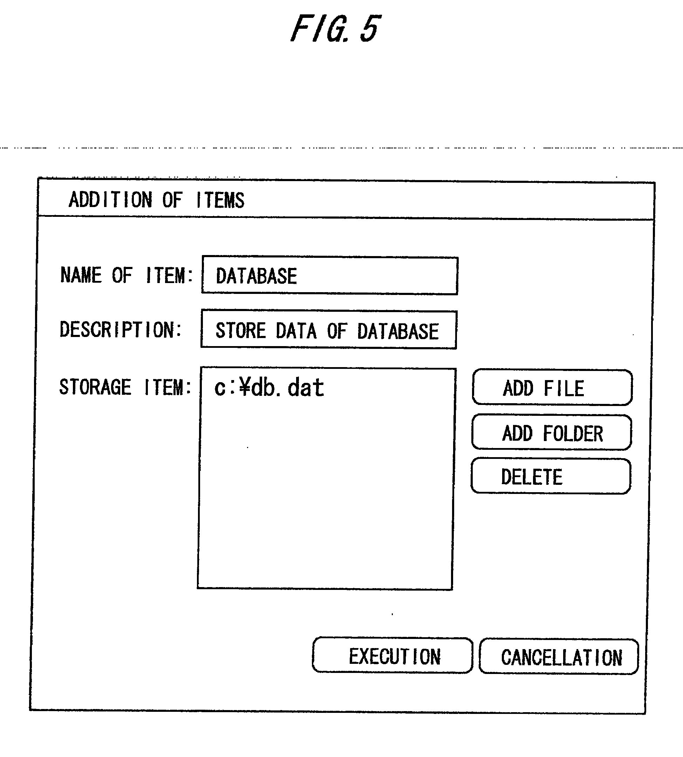

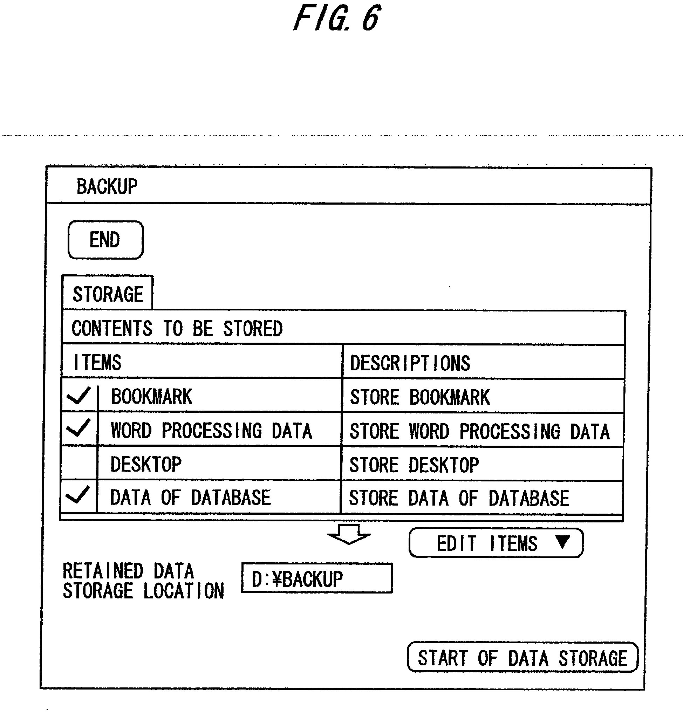

Moreover, the user is enabled to give an instruction of adding, editing and deleting the items by selecting an [edit of item] button in FIG. 4. FIG. 5 is a diagram showing an operation screen displayed when the user gives the instruction of adding the items. On the operation screen in FIG. 5, a [name of item] and a [description] correspond to the [items] and the [descriptions] in FIG. 4, and their detailed explanations are omitted. Further, a list of data as backup target data is displayed in a [storage item]. Note that the user can designate a backup target data file on a file-by-file basis by manipulating an [add file] button. Moreover, the user can designate a backup target data file on a folder-by-folder basis by manipulating an [add folder] button. Furthermore, when selecting a desired file name from within file names displayed in the [storage item] and manipulating a [delete] button, the selected file can be excluded from the backup target file displayed in the [name of item]. Then, when selecting an [execution] button, the items set on the operation screen is added as illustrated in FIG. 6.

Getting back to the description in FIG. 4, a [retained data storage location] in FIG. 4 represents a saving location area of the backup target data, and, though a predetermined saving location area is designated as a default area, the user can change the saving location area (step S105). A second logical partition different from a first logical partition on the HDD 13 stored with the first OS can be designated as the saving location area. The second logical partition may be a separate partition set on the HDD 13 and may also be a HDD different from a HDD stored with the first OS if the information processing device 1 is mounted with a plurality of HDDs 13. Further, the second logical partition may be not the HDD but a palm-held storage medium such as the FD 25 and the USB memory 26 and may also be another information processing device based on the NCU 17 via a communication line.

The user selects a [start of data storage] button on the operation screen in FIG. 4 or FIG. 6, whereby the backup rescue program executes, based on the user's manipulations on the operation screen, a process of recognizing the backup target data selected in step S104 shown in FIG. 2, also recognizing the backup target data saving location area selected in S105, and saving the designated backup target data in the designated saving location area (step S106).

Note that in this saving process, the name of item, the description, the information in the storage item and the target data storage location information (path) on the HDD 13 are stored as pieces of added information together with the respective pieces of target data in the saving location area. Moreover, as for the item that is not, though designated in the [items] in FIG. 4, designated as the saving target item, the data file thereof is not saved, however, the name of item, the description, the information of the storage item and the storage location information are stored in the saving location area.

In the way described above, even when the information processing device 1 does not normally operate due to a breakdown of the first OS in the HDD 13, the updated data file can be saved.

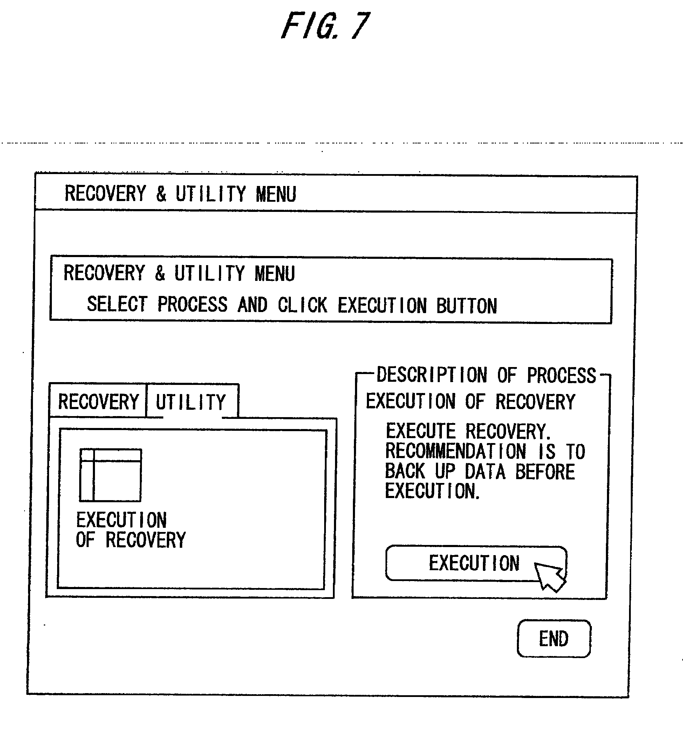

After completion of the saving process, as illustrated in FIG. 7, a first restoration (recovery) program is executed on an operation screen for [recovery], which is displayed by the backup rescue program. The first restoration program makes restoration back to a maker delivery status of the information processing device 1 in order for the first OS to be normally started up in a way that transfers a disk image file stored on the optical disk 24. After selecting an icon of [execution of recovery] on the operation screen in FIG 7, the restoring process (recovery) is executed by selecting the [execution] button. This restoring process (recovery) is generally known, and hence an in-depth description of the process is omitted.

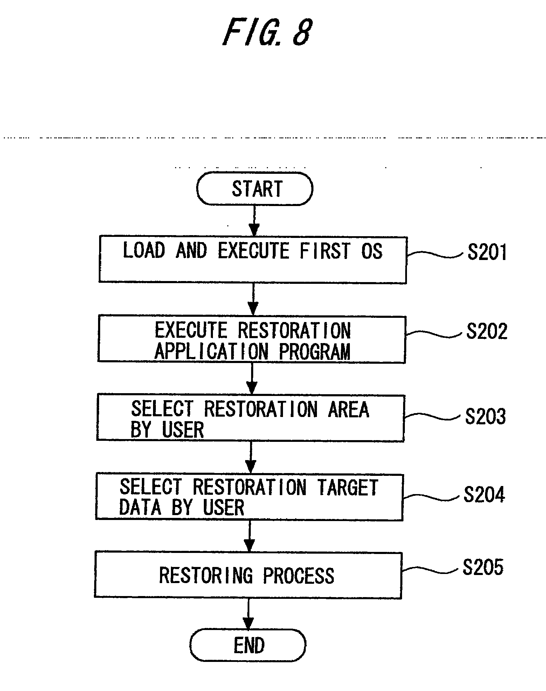

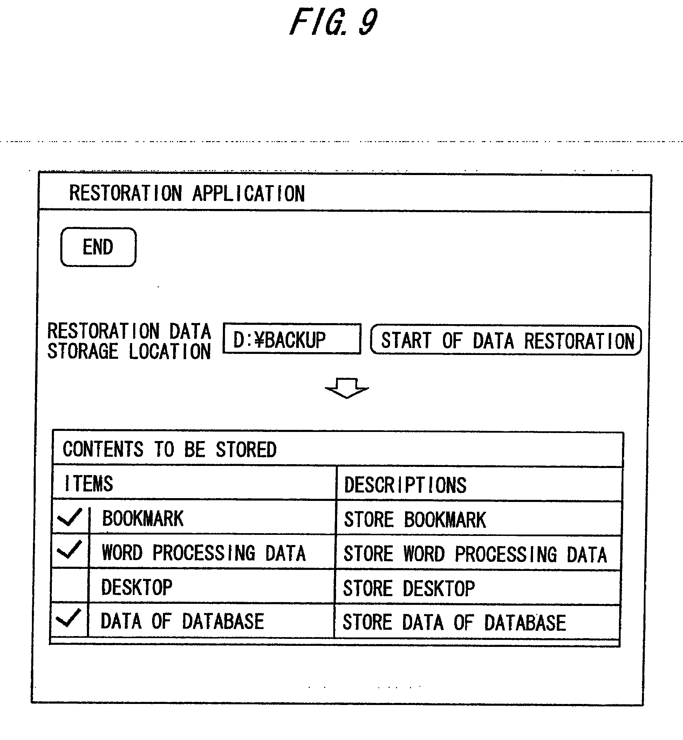

A process of operating the information processing device 1 by the first OS enabled to normally run after the restoring process (recovery) of the HDD 13 and restoring the saved data, will be described with reference to FIGS 8 and 9. FIG. 8 is an explanatory flowchart of the process of restoring the backup data on the basis of a restoration application (a second restoration program) running on the first OS that normally operates. FIG. 9 is a diagram showing an operation screen for the application program.

To begin with, when the user restarts up the information processing device 1 after the restoring process of the HDD 13, as described above, the POST process and the startup of the BIOS are executed, and the first OS is read from the HDD 13, then loaded into the RAM 12 and executed (step S201).
Subsequent to the normal execution of the first OS, the restoration application is read from the HDD 13, then loaded into the RAM 12 and executed. It is to be noted that the execution of the restoration application may be started corresponding to an instruction of the user and may also be automatically done when starting up the OS (step S202).
The restoration application, when executed, displays a predetermined operation screen on the DSP 18, then the user recognizes a restoration area and restoration target data that are designated on the operation screen, and the process of restoring the saved data is executed.

FIG. 9 is a diagram showing an operation screen displayed by the restoration application. The operation screen in FIG. 9 is displayed by executing the restoration application in step S202 in FIG. 8.

The user designates, as a restoration data storage location, a retained data storage location specified by the backup rescue program.

Through the designation of the restoration data storage location, the name of item, the information on the description storage item and the storage location information (path), which are defined as the added information remaining saved by the saving process, are read and displayed as a list in [contents to be restored]. Moreover, with respect to the items with only the added information stored, check boxes neighboring to the [items] of the [contents to be restored] are checked. Thereafter, the user, as for the data undesirable to be restored though saved, cancels the checked status of the check boxes neighboring to the items associated with these pieces of data.

After such an operation, the user selects a [start of data restoration] button, whereby the restoration application recognizes the restoration data storage location and also the data designated as the restoration target data, then reads the designated data from the restoration data storage location, and stores the designated data in a storage location (folder) of the HDD 13, which is specified by the storage location information saved as the added information. Thus, it follows that the data saved so far is restored back to the original location before the first OS gets broken down (steps S203 - S205).
The discussion has been made above such that the optical disk is stored with the second OS according to the present invention and other programs, and the information processing device is made to execute the processes and operations according to the present invention, however, the second OS may be, if the partition is logically different from at least the partition stored with the first OS, stored in the same hard disk as the hard disk stored with the first OS. If changed to enable the system to start up from the partition stored with the second OS according to the present invention on the occasion of starting up the information processing device 1, the second OS is started up, and the data can be saved and stored by executing the processes according to the present invention.

### <Second Embodiment>

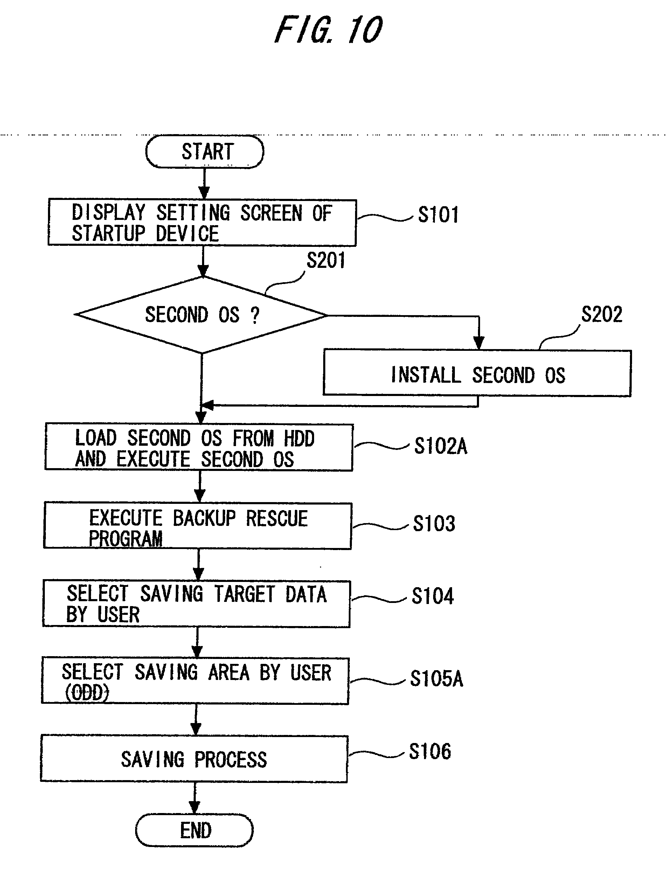

FIG. 10 is an explanatory flowchart of the backup process in a second embodiment of the present invention. The second embodiment is different from the first embodiment discussed above in terms of a point that the second OS is stored in a first storage unit and is then made to run, and other configurations are the same. Hence, the repetitive explanations are omitted in a way that marks the same components with the same numerals and symbols.

The information processing device 1 in the second embodiment includes, in the same way as in the first embodiment described above, as illustrated in FIG. 1, the CPU 10, the main memory 12, the HDD 13, etc. The CPU 10 functions, by executing a program according to the second embodiment, also as a transferring means in addition to the startup means, the saving means, the first restoring means and the second restoring means.

Next, the backup process, in case the first OS of the information processing device 1 does not normally function, will be explained with reference to FIGS. 10 and 3 through 6. FIG. 10 is an explanatory flowchart of the backup process based on a rescue program according to the second embodiment. FIGS. 3 through 6 are explanatory diagrams of display contents on a screen displayed on the DSP 18 in a process of the flowchart in FIG. 10.

At first, when the user indicates the power-on by manipulating the power button of the information processing device 1, the information processing device 1 (the CPU 10), after executing the POST process described above, executes the BIOS. When executing the BIOS, upon detecting that a predetermined key is pressed by the user, the information processing device 1 displays a setting screen for the startup device. When the user selects the startup device from on this setting screen, the information processing device 1 sets the selected device, e.g., the ODD (Optical Disk Drive; a reading/writing device) 14 as the startup device (step S101).

When the setting of the startup device is done in step S101, a read from the optical disk (a second storage unit such as a DVD-ROM) loaded into the ODD 14 is conducted. Herein, an assumption is that the ODD 14 is loaded with the read-only optical disk 24 stored with a program according to the second embodiment of the present invention.

The information processing device 1 executes the program (an install program), thereby determining whether or not the second OS is installed into the HDD (the storage device) 13 through a function of the transferring means (step S201). Herein, if the second OS is not installed into the HDD 13, the information processing device 1 reads and transfers, by use of the transferring means, the second OS from the optical disk 24 loaded into the ODD 14, and installs the second OS in an OS area of the storage device (step S202). It should be noted that the OS area in the second embodiment is set to an operation area pre-generated on the storage device 13 and may also be anywhere on the storage device 13 if enabled to read and execute the OS faster than by the ODD 14.

After installing the second OS or when determining in step S201 that the second OS has already been installed, the information processing device 1, through the startup means, reads the second OS from the storage device, then loads the second OS into the RAM 12 and executes the same OS (step S102A).

The information processing device 1, coming to an operating status (a status processible of a variety of processes) with the execution of the second OS, subsequently reads the backup rescue program (the saving program) from the optical disk 24, then loads the backup rescue program into the RAM 12 and executes this program (step S103).

Upon executing the backup rescue program, the information processing device 1 displays a predetermined operation screen on the DSP 18, and prompts the user to designate saving process target data and a saving location thereof. Then, the information processing device 1, according to the user's designation on the operation screen, recognizes the target data and the saving location thereof (steps S104, S105A) and executes the saving process (step S106).

FIG. 3 is a diagram showing the operation screen displayed by the backup rescue program. The operation screen in FIG. 3 is displayed by executing the backup rescue program in step S103 in FIG. 10. A processing function of the backup rescue program is roughly classified into the twc categories, [recovery] and [utility]. As illustrated in FIG. 3, the operation screen is provided with the tabs for selecting the respective categories. Herein, the backup process is set to the category [utility], wherein the icon for giving an instruction of executing the backup process is displayed as the processing option. The user selects the "backup" icon by manipulating the mouse 20 as the mouse cursor pinpoints the "backup", and can give the instruction of starting the backup process by selecting the "execution" button.

FIG. 4 is the diagram illustrating the operation screen for setting the backup started by selecting the "execution" button in FIG. 3. On the operation screen in FIG. 4, the [contents to be stored] represent the list of information showing data selectable as the backup targets. In the [contents to be stored], two categories of information are displayed, wherein pieces of information for identifying the data type are displayed in the [items], and the supplementary explanations are displayed in the [descriptions]. Further, when checking the check box adjacent to each [item], the data in the checked [item] is selected as the backup target item, and, when canceling the check, the check-canceled data is excluded from the backup target items (step S104). Note that the default folder stored with the setting data of the application program installed in the HDD 13 when the information processing device 1 is delivered from the maker and with data generated by the user, is designated in the initial status.

Moreover, the user is enabled to give the instruction of adding, editing and deleting the items by selecting the [edit of item] button in FIG. 4. FIG. 5 is the diagram showing the operation screen displayed when the user gives the instruction of adding the items. On the operation screen in FIG. 5, the [name of item] and the [description] correspond to the [items] and the [descriptions] in FIG. 4, and their detailed explanations are omitted. Further, the list of data as the backup target data is displayed in the [storage item]. Note that the user can designate the backup target data file on the file-by-file basis by manipulating the [add file] button. Moreover, the user can designate the backup target data file on the folder-by-folder basis by manipulating the [add folder] button. Furthermore, when selecting the desired file name from within file names displayed in the [storage item] and manipulating the [delete] button, the selected file can be excluded from the backup target file displayed in the [name of item]. Then, when selecting ten [execution] button, the items set on the operation screen is added as illustrated in FIG. 6.

Further in FIG. 4, the [retained data storage location] represents a saving location area of the backup target data, and, though a predetermined saving location area is designated as a default area, the user can change the saving location area (step S105A). The second logical partition different from the first logical partition on the HDD 13 stored with the first OS can be designated as the saving location area. The second logical partition may be the separate partition set on the HDD 13 and may also be the HDD different from the HDD stored with the first OS if the information processing device 1 is mounted with the plurality of HDDs 13. Further, the second logical partition may be not the HDD but the palm-held storage medium such as the FD 25 and the USB memory 26 and may also be another information processing device based on the NCU 17 via the communication line.

The user selects a [start of data storage] button on the operation screen in FIG. 4 or FIG. 6, whereby the backup rescue program executes, based on the user's manipulations on the operation screen, a process of recognizing the backup target data selected in step S104 shown in FIG. 2, also recognizing the backup target data saving location area selected in S105, and saving the designated backup target data in the designated saving location area (step S106). At this time, if the ODD (i.e., the optical disk 24) 14 is selected as the saving location area, a message showing a purport of taking out the second storage unit and loading the writable optical disk 24 is displayed on the DSP 18, thus prompting the user to exchange the optical disk 24. Then, the information processing device 1, when detecting that the writable optical disk has been loaded, starts the saving process.

Note that in this saving process, the name of item, the description, the information in the storage item and the target data storage location information (path) on the HDD 13 are stored as pieces of added information together with the respective pieces of target data in the saving location area. Moreover, as for the item that is not, though designated in the [items] in FIG. 4, designated as the saving target item, the data file thereof is not saved, however, the name of item, the description, the information of the storage item and the storage location information are stored in the saving location area.

In the way described above, even when the information processing device 1 does not normally operate due to the breakdown of the first OS in the HDD 13, the updated data file can be saved.

After the completion of the saving process, as illustrated in FIG. 7, the first restoration (recovery) program is executed on the operation screen for [recovery], which is displayed by the backup rescue program. The first restoration program makes the restoration back to the maker delivery status of the information processing device 1 in order for the first OS to be normally started up in a way that transfers the disk image file stored on the optical disk 24. After selecting the icon of the [execution of recover] on the operation screen in FIG. 7, the restoring process (recovery) is executed by selecting the [execution] button. This restoring process (recovery) is the generally known, and hence the in-depth description of the process is omitted.

The information processing device 1 is operated based on the first OS enabled to normally run after the restoring process of the HDD 13, and the restoring process is carried out by the executing the second restoration program. Note that the restoring process is the same as the process described with reference to FIGS. 8 and 9.

Thus, in the second embodiment, even in the case of employing the optical disk 24 serving as the second storage unit, the second OS is transferred to the HDD 13 having a high reading speed and then started up, and hence the saving process can be quickly performed.

Moreover, in the second embodiment, after transferring the second OS, the second storage unit is taken out of the ODD 14 while another optical disk 24 is loaded, and the saving data can be written thereto. Thus, the single reading/writing device can read the second OS and write the saving data to the predetermined storage area.

Accordingly, even in the case of writing the saving data to the portable (palm-held) storage medium, there is no necessity of providing the write device separately from the reading device for the second storage unit, and the information processing device executing the saving process according to the present invention can be downsized.

Moreover, it is feasible to use the read-only storage medium serving as the second storage unit stored with the first OS and the second OS. Namely, the read-only optical disk formed with pits by press working can be used as the second storage unit, and therefore the second storage unit can be provided in an easy-to-mass-produce state but in a hard-to-falsify state.

### <Third Embodiment>

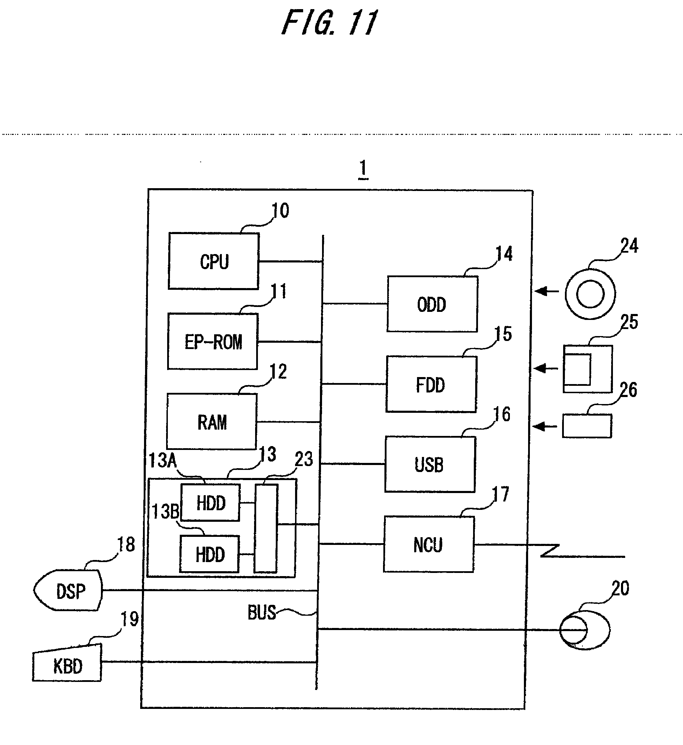

FIG. 11 is a schematic diagram of the information processing device according to a third embodiment of the present invention. The third embodiment is different from the second embodiment discussed above in terms of a point that the storage device 13 is constructed of a plurality of physically different units, and other constructions are the same. Therefore, the repetitive explanations are omitted in a way that marks the same components with the same numerals and symbols.

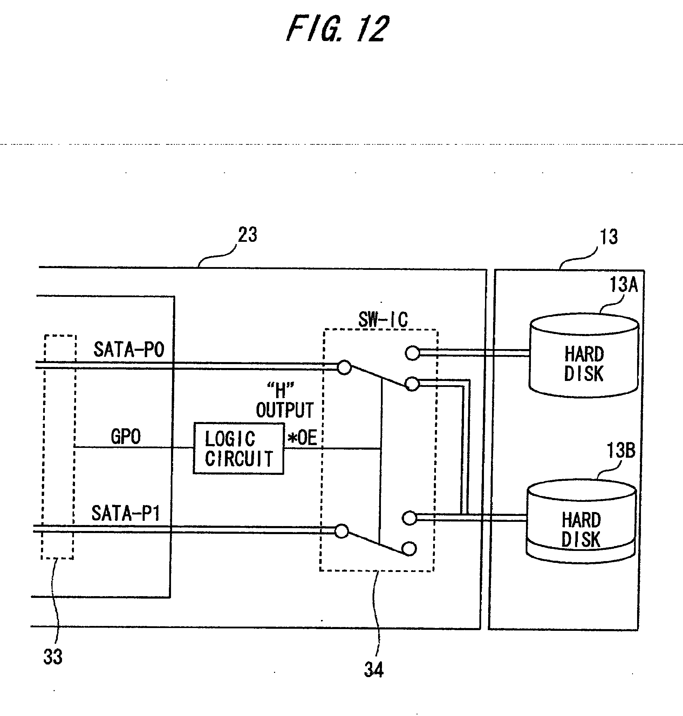

The storage device 13 according to the present invention includes, as illustrated in FIGS. 11 and 12, a first HDD 13A and a second HDD 13B that are generically defined as the HDD 13, wherein the first HDD 13A is stored with the first OS and the application program, and the second HDD 13B is stored mainly with data etc generated by the application program.

The first HDD 13A and the second HDD 13B are connected via a storage interface 23 to a bus (BUS) in the information processing device 1. Note that the BIOS performs a step of detecting a fault by checking the operations of the first HDD 13A and the second. HDD 13B. To be specific, the CPU 10 functions as a fault detecting unit 33 by executing this step. As a result of this detection, the CPU 10 sets "High" an output of GPO if the first storage unit 13A is in a normal status but sets "Low" the output of the GPO if getting into the fault.

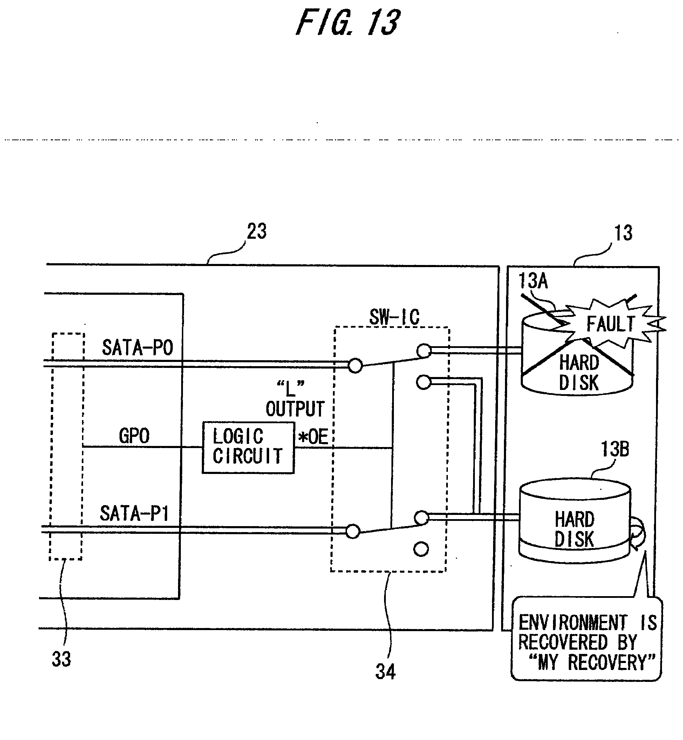

Further, a switching unit (SW-IC) 34, when the fault detecting unit 33 detects the fault of the first HDD 13A, switches over the status to a fault-occurred status in FIG. 13 from the normal status in FIG. 12, thus switching over connection ports of the storage units 13A, 13B. More specifically, the connection port of the second HDD 13B is switched over to a connection port SATA-P0 from a connection port SATA-P1, while the first HDD 13A is disconnected from the connection port SATA-P0.

Thus, the information processing device 1 according to the third embodiment, during the normal operation, comes to the operating status by executing the first OS read from the first HDD 13A, and executes the application program, thereby carrying out the variety of processes. At this time, the first OS recognizes the first HDD 13a as a C-drive and the second HDD 13B as a D-drive.

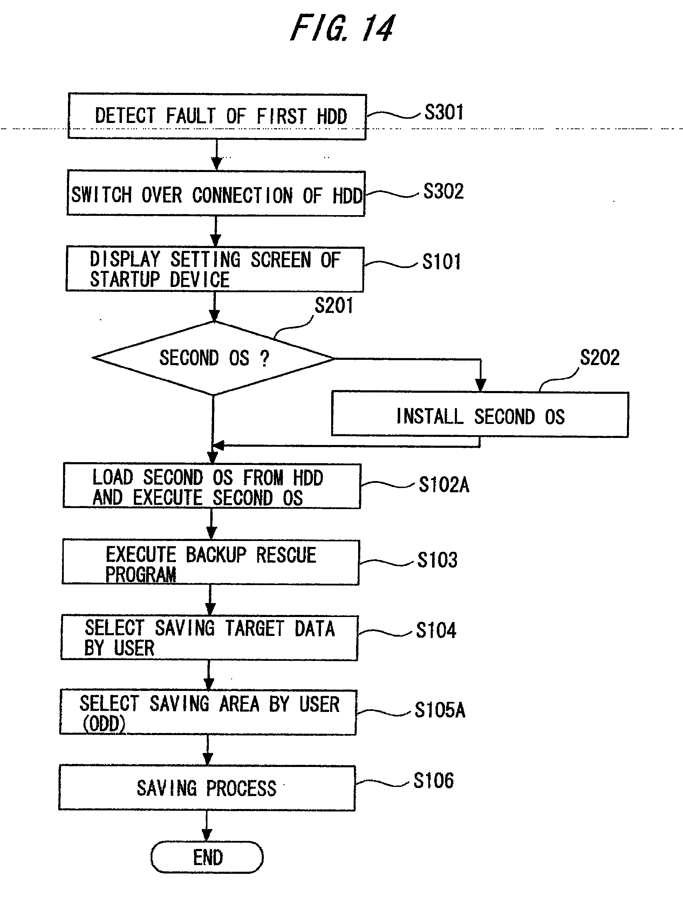

Then, the backup process, in case the first OS of the information processing device 1 does not normally function, will be described with reference to FIG. 14. FIG. 14 is an explanatory flowchart of the backup process based on the rescue program in the third embodiment. In the process shown in the flowchart in FIG. 14, the screen (FIGS. 3-6) displayed on the DSP 18 and the operation thereof are the same as in the embodiments discussed above.

To start with, in case of malfunction, when the user gives an instruction of restarting up the information processing device 1 or an instruction of power-on by manipulating the power button, the information processing device 1 (the CPU 10) executes the BIOS after executing the POST process described above.

Hereat, when the fault detecting unit 33 detects the fault of the first HDD 13A, the information processing device 1 starts the saving process shown in FIG. 13 (step S301).

The fault detecting unit 33 sets "Low" the output of the GPO, at which time the switching unit 34 switches over the storage device connected to the connection port SATA-P0 to the second HDD 13B from the first HDD 13A (step S302).

Moreover, upon detecting that the user has pressed the predetermined key, the information processing device 1 displays the setting screen for the startup device. When the user selects the startup device from on this setting screen, the information processing device 1 sets the selected device, e.g., the ODD (Optical Disk Drive; the reading/writing device) 14 as the startup device (step S101).

When the setting of the startup device is done in step S101, the read from the optical disk (the second storage unit such as the DVD-ROM) loaded into the ODD 14 is conducted. Herein, the assumption is that the ODD 14 is loaded with the read-only optical disk 24 stored with the program according to the second embodiment of the present invention.

The information processing device 1 executes the program (an install program), thereby determining whether or not the second OS is installed into the second HDD (the storage device) 13B through a function of the transferring means (step 5201). Herein, if the second OS is not installed into the second HDD 13B, the information processing device 1 reads and transfers, by use of the transferring means, the second OS from the optical disk 24 loaded into the ODD 14, and installs the second OS in an OS area of the second HDD 13B (step S202).

After installing the second OS or when determining in step S201 that the second OS has already been installed, the information processing device 1, through the startup means, reads the second OS from the second HDD 13B, then loads the second OS into the RAM 12 and executes the same OS (step S102A).

The information processing device 1, coming to then operating status (the status processible of the variety of processes) with the execution of the second CS, subsequently reads the backup rescue program (the saving program) from the optical disk 24, then loads the backup rescue program into the RAM 12 and executes this program (step S103).

Upon executing the backup rescue program, the information processing device 1 displays the predetermined operation screen (FIGS. 3 - 6) on the DSP 18, and prompts the user to designate saving process target data and the saving location thereof. Then, the information processing device 1, according to the user' s designation on the operation screen, recognizes the target data and the saving location thereof (steps S104, S105A) and executes the saving process (step S106).

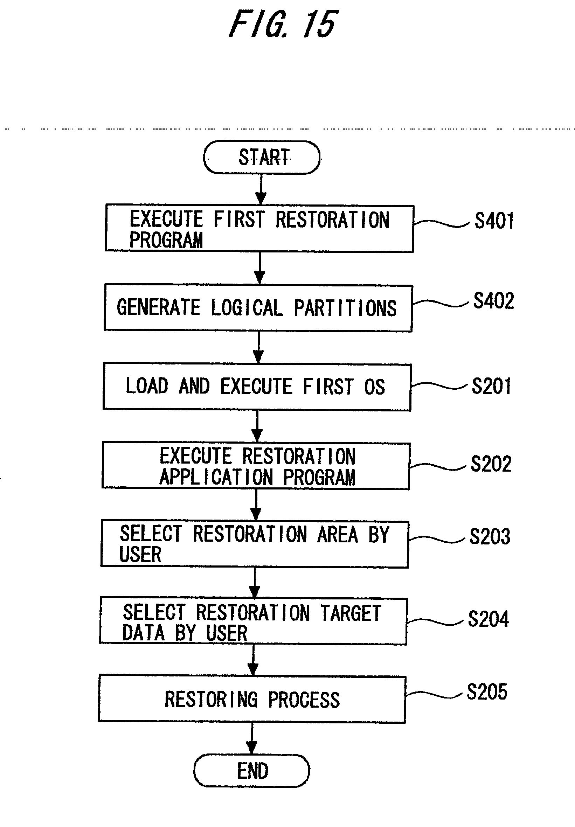

After the completion of the saving process, as shown in FIGS. 7 and 15, the first restoration program is executed from on the operation screen for [recovery] displayed by the backup rescue program (step S401).

Herein, the information processing device 1 generates predetermined logical partitions (logically different storage areas) by formatting the second HDD 13B because of the fault of the first HDD 13A. The third embodiment involves generating the two normal logical partitions and one logical partition (a hidden area) for the operation (step S402).

The information processing device 1 transfers the disk age file stored in the optical disk 24 to one of the normal logical partitions, and makes the restoration so that the first OS is normally started up. This restoring process is generally known, and hence the in-depth description of the process is omitted. With this process, logically the two drives, though their storage capacities are lessened, are generated, and the same state as when the information processing device 1 is delivered from the maker is restored.

Then, when restarting up the information processing device 1 after the restoring process, as described above, the POST process and the startup of the BIOS are executed, and the first OS is read from the HDD 13, then loaded into the RAM 12 and executed (step 5201).

Subsequent to the normal execution of the first OS, the restoration application (the second restoration program) is read from the HDD 13, then loaded into the RAM 12 and executed. It is to be noted that the execution of the restoration application may be started corresponding to the instruction of the user and may also be automatically done when starting up the OS (step S202).

The restoration application, when executed, displays the predetermined operation screen on the DSP 18, then the user recognizes the restoration area and restoration target data that are designated on the operation screen, and the process of restoring the saved data is executed.

FIG. 9 is the diagram showing the operation screen displayed by the restoration application. The operation screen in FIG. 9 is displayed by executing the restoration application in step S202 in FIG. 15.

The user designates, as the restoration data storage location, the retained data storage location specified by the backup rescue program. At this time, the first OS recognizes, in the normal logical partitions, the logical partition installed with the first OS as the C-drive and the other logical partition as the D-drive. It is therefore possible to designate, in the same way as before the fault occurs, the OS and the program in the C-drive and the user data in the D-drive.

Through the designation of the restoration data storage location, the name of item, the information on the description storage item and the storage location information (path), which are defined as the added information remaining saved by the saving process, are read and displayed as the list in the [contents to be restored]. Moreover, with respect to the items with only the added information stored, the check boxes neighboring to the [items] of the [contents to be restored] are checked. Thereafter, the user, as for the data undesirable to be restored though saved, cancels the checked status of the check boxes neighboring to the items associated with these pieces of data.

After such an operation, the user selects the [start of data restoration] button, whereby the restoration application recognizes the restoration data storage location and also the data designated as the restoration target data, then reads the designated data from the restoration data storage location, and stores the designated data in the storage location (folder) of the HDD 13, which is specified by the storage location information saved as the added information. Thus, it follows that the data saved so far is restored back to the original location before the first OS gets broken down (steps S203 - S205).

Thus, according to the third embodiment, the same effects as by the second embodiment discussed above are acquired, and, in addition, even if the first storage unit is physically broken down, it is feasible to rescue the data stored in the second storage unit and to make the recovery to the second storage unit.
Especially, in the third embodiment, if the first storage unit gets physically broken down, the same directory architecture as before the fault occurs can be built up again by generating the logically different storage areas on the second storage unit.

## Claims

1. A processing device having a storage device stored with a first basic program and data, comprising:
startup means for setting said information processing device in an operating status by executing a second basic program stored in a second storage unit at least logically different from a first storage unit of said storage device that is stored with the first basic program and the data; and
saving means for saving the data stored in said first storage unit into a predetermined storage area by use of the second basic program.

2. A processing device according to claim 1, wherein said second storage unit is a portable storage medium.

3. A processing device according to claim 1, wherein a plurality of logical partitions is set on said storage device,
said first storage unit is a first logical partition, and
the predetermined storage area is a second logical partition different from the first logical partition.

4. A processing device according to claim 1, wherein said storage device is constructed of a plurality of storage devices,
a first storage device is stored with the first basic program and the data, and
the predetermined storage area is a second storage device different from said first storage device.

5. A processing device according to claim 1, wherein said saving means enables a user to designate the data to be saved in the predetermined storage area in pieces of data stored in said first storage unit.

6. A processing device according to claim 1, wherein said saving means enables the user to designate the predetermined storage area.

7. A processing device according to claim 1, wherein the data saved in the predetermined storage area contains data generated or updated by an operation of said information processing device.

8. A processing device according to any one of claims 1 through 7, further comprising transferring means for getting a basic program area, on said storage device, stored with the second basic program stored in said second storage unit,
wherein said startup means executes the second basic program transferred to the basic program area.

9. A processing device according to claim 8, wherein the basic program area is set on said storage device having a higher reading speed than by said second storage unit.

10. A processing device according to claim 8, further comprising a reading/writing device for a storage medium,
wherein said transferring means reads and transfers, through said reading /writing device, the second basic program from a read-only storage medium serving as said second storage unit, and
said saving means writes and saves, through said reading/writing device, to and in a readable/writable storage medium loaded into said reading/writing device in place of said second storage unit.

11. A processing device according to claim 1, wherein said second storage unit is stored with storage contents of said first storage unit, which contain the first basic program in the normally operating status, and the storage contents of said first storage unit that are stored in said second storage unit are transferred to said first storage unit,
said information processing device further comprises:
first restoring means for restoring said first storage unit so that said information processing device is set in a normally operating status by the first basic program in a way that transfers the storage contents of said first storage unit, which are stored in said second storage unit, to said first storage unit; and
second restoring means for restoring the data saved in the predetermined storage area back to said storage device after restoring said first storage unit by said first restoring means.

12. A processing device according to claim 11, wherein said saving means, when saving the data, stores storage location information of the data in said first storage unit in the predetermined storage area, and
said second restoring means restores the data saved in the predetermined storage area back to the location of said first storage unit that is specified by the storage location information corresponding to the data concerned.

13. A processing device according to claim 12, wherein said second restoring means enables the user to designate the data to be restored back to said first storage unit in pieces of data saved in the predetermined area.

14. A processing device according to clam 8, wherein said storage device includes a plurality of physically different storage devices, a first storage device in said plurality of storage devices is stored with at least the first basic program, and a second storage device is stored with the data,
said information processing device further comprises a fault detecting unit detecting a fault of said first storage device,
when said fault detecting unit detects the fault of said first storage device, said transferring means gets a basic program area, on said second storage device, stored with a second basic program stored in said second storage unit, and
said saving means saves the data, stored in said second storage device, in the predetermined storage area by use of the second basic program transferred.

15. A processing device according to claim 14, wherein said second storage unit is stored with storage contents of said first storage unit, which contain the first basic program in the normally operating status, and
said information processing device further comprises first restoring means, when said fault detecting unit detects a fault of said first storage device, transfers the storage contents of said first storage unit, which are stored in said second storage unit, to said second storage device, and restores said first storage unit so that said information processing device is set in the normally operating status by the first basic program.

16. A processing device according to claim 15, further comprising second restoring means restoring, after said first restoring means has restored the data saved in the predetermined storage area from said second storage device back to said first storage unit, the data back to said second storage device.

17. A processing device according to claim 14, further comprising a switching unit switches over, when said fault detecting unit detects the fault of the first storage device, a connection of said storage device and connects said second storage device as said first storage device.

18. A program executed by a processing device having a storage device stored with a first basic program and data, said program making said information processing device execute:
a step of setting said information processing device in an operating status by a second basic program stored in a second storage unit at least logically different from a first storage unit of said storage device that is stored with the first basic program and the data; and
a step of saving the data stored in said first storage unit into a predetermined storage area by a saving program stored in said second storage unit in a way that employs the second basic program.

19. A program according to claim 18, further making said information processing device execute a step of transferring and storing the second basic program stored in said second storage unit to and in a basic program area on said storage device,
wherein executing the second basic program transferred to the basic program area.

20. A program according to claim 19, wherein said information processing device including a reading/writing device for a storage medium, on the occasion of transferring the second basic program, the second basic program is read and transferred by said reading/writing device from a read-only storage medium serving as said second storage unit, and
on the occasion of saving the data, the data is written and saved by said reading/writing device to and in a readable/writable storage medium loaded into said reading/writing device in place of said second storage unit.

21. A program according to claim 18, further making said information processing device, said second storage unit being stored with storage contents of said first storage unit which contain the first basic program in the normally operating status, execute:
a step of restoring said first storage unit by use of a first restoration program stored in said second storage unit so that said information processing device is set in a normally operating status by the first basic program in a way that transfers the storage contents of said first storage unit, which are stored in said second storage unit, to said first storage unit; and
a step of restoring the data saved in the predetermined storage area back to said storage device by a second restoration program contained in the storage contents after restoring said first storage unit.

22. A program according to any one of claims 18 through 21, further making said information processing device, said storage device including a plurality of physically different storage devices, a first storage device in said plurality of storage devices being stored with at least the first basic program and a second storage device being stored with the data, execute:
a step of detecting a fault of said first storage device,
wherein when detecting the fault of said first storage device, on the occasion of transferring the second basic program, the second basic program stored in said second storage unit is stored in a basic program area on said second storage device, and
on the occasion of saving the data, the data stored in said second storage device is saved in the predetermined storage area by use of the second basic program transferred.

23. A program according to claim 22, further making said information processing device, said second storage unit being stored with the storage contents of said first storage unit which contain the first basic program in the normally operating status, execute a step of transferring, when detecting a fault of said first storage device, the storage contents of said first storage unit, which are stored in said second storage unit, to said second storage device, and restoring said first storage unit so that said information processing device is set in the normally operating status by the first basic program.

24. A program according to claim 23, further making said information processing device execute a step of restoring, after restoring the data saved in the predetermined storage area from said second storage device back to said first storage unit, the data back to said second storage device.

25. A program according to claim 22, further making said information processing device execute a step of switching over, when detecting the fault of the first storage device, a connection of said storage device and connecting said second storage device as said first storage device.

26. A storage medium stored with a program executed by a processing device having a storage device stored with a first basic program and data, said storage medium being a portable storage medium physically different from said storage device stored with the first basic program and the data and being stored with storage contents of said storage device that contain the first basic program in a normally operating status, said program making said information processing device execute:
a step of setting said information processing device in an operating status by a second basic program stored in saidportable storage medium;
a step of saving the data stored in said storage device into a predetermined storage area by a saving program stored in said portable storage medium in a way that employs the second basic program;
a step of restoring said storage device by use of a first restoration program stored in said portable storage medium so that said information processing device is set in a normally operating status by the first basic program in a way that transfers the storage contents of said storage device, which are stored in said portable storage medium, to said storage device; and
a step of restoring the data saved in the predetermined storage area back to said storage device bya second restoration program contained in the storage contents after restoring said storage device.

27. An information processing method executed by a processing device having a storage device stored with a first basic program and data, comprising:
a step of setting said information processing device in an operating status by a second basic program stored in a second storage unit at least logically different from a first storage unit of said storage device that is stored with the first basic program and the data; and
a step of saving the data stored in said first storage unit into a predetermined storage area by a saving program stored in said second storage unit in a way that employs the second basic program.

28. An information processing method according to claim 27, further comprising a step of storing the second basic program stored in said second storage unit in a basic program area on said storage device,
wherein executing the second basic program transferred to the basic program area.

29. An information processing method according to claim 28, wherein said information processing device including a reading/writing device for a storage medium, on the occasion of transferring the second basic program, the second basic program is read and transferred by said reading/writing device from a read-only storage medium serving as said second storage unit, and
on the occasion of saving the data, the data is written and saved by said reading/writing device to and in a readable/writable storage medium set into said reading/writing device in place of said second storage unit.

30. An information processing method according to claim 27, further, said second storage unit being stored with storage contents of said first storage unit which contain the first basic program in the normally operating status, comprising:
a step of restoring said first storage unit by use of a first restoration program stored in said second storage unit so that said information processing device is set in a normally operating status by the first basic program in a way that transfers the storage contents of said first storage unit, which are stored in said second storage unit, to said first storage unit; and
a step of restoring the data saved in the predetermined storage area back to said storage device by a second restoration program contained in the storage contents after restoring said first storage unit.

31. An information processing method according to any one of claims 27 through 30, further, said storage device including a plurality of physically different storage devices, a first storage device in said plurality of storage devices being stored with at least the first basic program and a second storage device being stored with the data, comprising:
a step of detecting a fault of said first storage device,
wherein when detecting the fault of said first storage device, on the occasion of transferring the second basic program, the second basic program stored in said second storage unit is stored in a basic program area on said second storage device, and
on the occasion of saving the data, the data stored in said second storage device is saved in the predetermined storage area by use of the second basic program transferred.

32. An information processing method according to claim 31, further, said second storage unit being stored with the storage contents of said first storage unit which contain the first basic program in the normally operating status, comprising a step of transferring, when detecting a fault of said first storage device, the storage contents of said first storage unit, which are stored in said second storage unit, to said second storage device, and restoring said first storage unit so that said information processing device is set in the normally operating status by the first basic program.

33. An information processing method according to claim 32, further comprising a step of restoring, after restoring the data saved in the predetermined storage area from said second storage device back to said first storage unit, the data back to said second storage device.

34. An information processing method according to claim 31, further comprising a step of switching over, when detecting the fault of the first storage device, a connection of said storage device and connecting said second storage device as said first storage device.
